# EUROPEAN PATENT SPECIFICATION

(11) **EP 4 242 785 B1**
(45) Date of publication and mention of the grant of the patent: **02.09.2026**
(21) Application number: 21901053.5
(22) Date of filing: 03.12.2021
(51) Int. Cl.: G06F 1/16, G09F 9/30

(54) **ELECTRONIC DEVICE HAVING FLEXIBLE DISPLAY**
ELEKTRONISCHE VORRICHTUNG MIT FLEXIBLER ANZEIGE
DISPOSITIF ÉLECTRONIQUE DOTÉ D'UNE UNITÉ D'AFFICHAGE FLEXIBLE

(30) Priority: 04.12.2020 KR 20200168654
(43) Date of publication of application: 13.09.2023
(73) Proprietor: Samsung Electronics Co., Ltd., Suwon-si, Gyeonggi-do 16677 (KR)
(72) Inventor: KIM, Jongdoo, Suwon-si Gyeonggi-do 16677 (KR); KIM, Sanguk, Suwon-si Gyeonggi-do 16677 (KR); NA, Hyoseok, Suwon-si Gyeonggi-do 16677 (KR); PARK, Daeseung, Suwon-si Gyeonggi-do 16677 (KR); JU, Wanjae, Suwon-si Gyeonggi-do 16677 (KR)
(74) Representative: Gulde & Partner
(86) International application number: PCT/KR2021/018173
(87) International publication number: WO 2022/119365

(56) References cited:
- CN-A- 107 845 330
- KR-A- 20130 140 446
- KR-A- 20190 141 518
- KR-A- 20200 101 116
- KR-A- 20200 117 741
- US-A1- 2013 334 981
- US-A1- 2015 220 188
- US-A1- 2017 199 712

## Description

### [Technical Field]

Various embodiments of the present disclosure are technologies for an electronic device having a flexible display, and more particularly, are technologies for a method capable of recognizing an extended length of the flexible display.

### [Background Art]

Electronic devices have complex functions, such as taking pictures or videos, playing music or video files, playing games, receiving broadcasts, and/or supporting wireless Internet, and are implemented in the form of comprehensive multimedia players. Accordingly, the electronic devices are developing into new forms in terms of hardware or software to enhance portability and convenience while satisfying user needs. As an example of this development, the electronic device can include a flexible display.

The electronic device including the flexible display can provide a wide screen and portability at the same time. The portability of the electronic device can be secured, as a part of the display is rolled in the inside of the electronic device and the display is reduced. Also, when the display is extended, the wide screen can be provided.
The US 2013/334981 A1 discloses a display device with a flexible display panel that can enter and discharge with respect to a housing. The display device discloses a movable conductive pattern including a plurality of sub-patterns, wherein one sub-pattern of the plurality of sub-patterns faces the sensing pattern such that a capacitance is used to sense the display area of the flexible display panel that is variably exposed. The CN 107 845 330 A discloses a concept of measuring electrical parameters of a positioning wire that remains in a positioning device to determine a pull-out area of the display.

### [Disclosure of Invention]

### [Technical Problem]

A mechanical state of a flexible type electronic device including a flexible display can be changed by a user gesture. Also, the flexible type electronic device can control an operation of the electronic device, based on the state change. For example, the flexible type electronic device can change from a state in which a part of the display is rolled in (or slid in) the inside of the electronic device to a state in which it is rolled out (or slid out). Accordingly, an area of the display exposed to the outside can be changed.

As the area of the display exposed to the outside is changed, a technology for displaying a screen on the basis of the area determined to be exposed to the outside by a processor is required. When the processor does not accurately determine the area of the display exposed to the outside, the processor can display a screen on the rolled-in display area. When the screen is displayed on the rolled-in display area, unnecessary power consumption can occur. Also, when a screen corresponding to the area of the display exposed to the outside is not displayed and a screen larger or smaller than that is displayed, usability of the electronic device can decrease.

The flexible type electronic device can use various auxiliary devices (e.g., magnets and encoders) in order to determine the area of the display exposed to the outside. However, when using various auxiliary devices, it is difficult to keep a thickness of the electronic device thin and accordingly, a mounting space for other components can be reduced.

Technical problems to be achieved in various embodiments of the present disclosure are not limited to the above-mentioned technical problems, and other technical problems not mentioned will be able to be clearly understood by those skilled in the art to which the present invention pertains from the description below.

### [Solution to Problem]

An electronic device according to the invention is defined in accordance with claim 1 of the appended claims..

A method of operating an electronic device is provided in accordance with claim 9 of the appended set of claims.

An electronic device in an embodiment may include a housing including a first housing and a second housing that is movable relative to the first housing, a flexible display exposed to the outside of the electronic device through a part of the housing, the flexible display having an area which is exposed to the outside and which changes as the second housing moves with respect to the first housing, a detection circuit which moves according to the movement of the second housing and which includes a plurality of conductive pads, a touch circuit including a touch sensor an a touch sensor IC, a conductive touch member which generates an electrical signal with any one of the plurality of conductive pads at a fixed point of the electronic device through the touch circuit, and at least one processor electrically connected to the flexible display and the detection circuit. The at least one processor may determine the size of the area exposed to the outside, based on the electrical signal acquired using the conductive touch member and the touch circuit according to the movement of the detection circuit.

### [Advantageous Effects of Invention]

An electronic device of various embodiments of the present disclosure may detect an externally exposed portion of the entire area of a display in real time while the display is being reduced and/or extended. Accordingly, the content displayed on a screen may continuously change according to the reduction and/or extension of the display. For example, the size of an image may be enlarged and/or reduced to a size corresponding to the reduction and/or extension of the display. Thus, the usability of the electronic device may be increased.

An electronic device of various embodiments of the present disclosure may detect an externally exposed portion of the entire area of a display, and display a screen corresponding to the externally exposed portion. Accordingly, unnecessary power consumption may be reduced by omitting screen display of an area not exposed to the outside.

Effects obtainable from the present disclosure are not limited to the above-mentioned effects, and other effects not mentioned will be able to be clearly understood by those skilled in the art to which the present disclosure pertains from the description below.

### [Brief Description of Drawings]

FIG. 1A is a front perspective view of a first state (e.g., a reduced state) of an electronic device according to an embodiment.
FIG. 1B is a front perspective view of a second state (e.g., an extended state) of an electronic device according to an embodiment.
FIG. 2A is a side cross-sectional view of an electronic device of a first state according to an embodiment.
FIG. 2B is a side cross-sectional view of an electronic device of a second state according to an embodiment.
FIG. 3 is a block diagram of an electronic device according to an embodiment.
FIG. 4 is a side cross-sectional view of an electronic device for explaining a detection circuit according to an embodiment.
FIG. 5 is a diagram for explaining electrical connection of a plurality of conductive pads included in a detection circuit according to an embodiment.
FIG. 6 is a diagram for explaining a contact member of an electronic device according to an embodiment.
FIG. 7 is a diagram for explaining an electronic device including a driving rail according to an embodiment.
FIG. 8 is a diagram for explaining an electronic device including a touch circuit according to an embodiment.
FIG. 9 is a flowchart illustrating an operation of an electronic device according to an embodiment.
FIG. 10 is a flowchart illustrating an operation of an electronic device including a rotating body structure according to an embodiment.
FIG. 11 is a block diagram of an electronic device in a network environment, according to various embodiments.

In connection with the description of the drawings, the same or similar reference numerals may be used for the same or similar elements.

### [Mode for Carrying out the Invention]

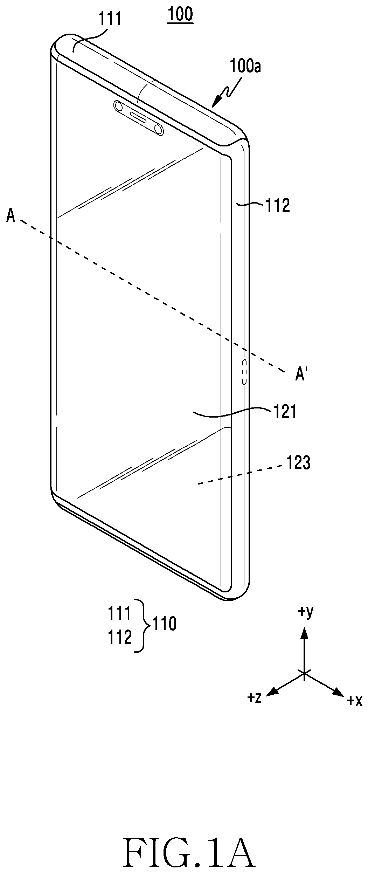

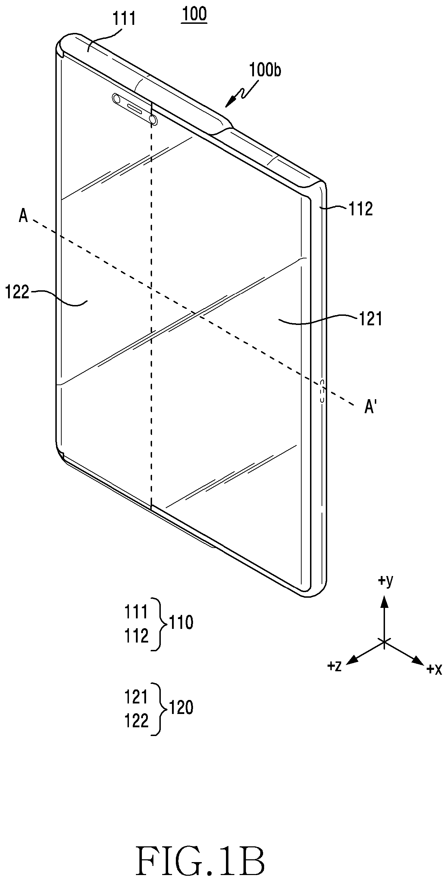

FIG. 1A is a front perspective view of a first state (e.g., a reduced state) of an electronic device 100 according to an embodiment. FIG. 1B is a front perspective view of a second state (e.g., an extended state) of the electronic device 100 according to an embodiment.

According to various embodiments disclosed in the present document, a surface directed in a direction substantially the same as a direction in which at least a part (e.g., a first portion 121) of a flexible display 120 positioned outside the electronic device 100 is directed may be defined as a front surface of the electronic device 100, and a surface facing the front surface may be defined as a rear surface of the electronic device 100. A surface of the flexible display 120 facing the front surface may be defined as a display rear surface 123. Also, a surface surrounding the space between the front surface and the rear surface may be defined as a side surface of the electronic device 100.

The flexible display 120 may be disposed on at least a part of the electronic device 100 of an embodiment. According to an embodiment, the flexible display 120 may be arranged to include at least some flat shapes and at least some curved shapes. According to an embodiment, the flexible display 120, and the housing 110 surrounding at least a part of an edge of the flexible display 120, may be disposed on the front surface of the electronic device 100.

According to an embodiment, the housing 110 may form a partial area of the front surface of the electronic device 100, the rear surface, and the side surface. In an embodiment, the front surface of the electronic device 100 may mean a surface of the electronic device 100 directing in a +z direction of FIG. 1A and FIG. 1B. In an embodiment, the rear surface of the electronic device 100 may mean a surface of the electronic device 100 directing in a -z direction of FIG. 1A and FIG. 1B. In an embodiment, the side surface of the electronic device 100 may mean a surface connecting the front surface and rear surface of the electronic device 100. According to another embodiment, the housing 110 may form a partial area of the side surface of the electronic device 100, and the rear surface.

The housing 110 includes a first housing 111, and a second housing 112 coupled to be movably with respect to the first housing 111 in a predetermined range.

According to an embodiment, the flexible display 120 may include the first portion 121 which may be coupled to the second housing 112, and a second portion 122 which may be extended from the first portion 121 and drawn in the inside of the electronic device 100.

According to an embodiment, the electronic device 100 may have a first state 100a and a second state 100b. For example, the first state 100a and the second state 100b of the electronic device 100 may be determined according to a relative position of the second housing 112 with respect to the first housing 111, and the state of the electronic device 100 may be changed between the first state 100a and the second state 100b by a user's control or mechanical operation.

According to an embodiment, the first state 100a of the electronic device 100 may mean a state before the housing 110 is extended. The second state 100b of the electronic device 100 may mean a state in which the housing 110 is extended.

According to an embodiment, when the state of the electronic device 100 is switched from the first state 100a to the second state 100b according to the movement of the second housing 112, the second portion 122 of the flexible display 120 may be drawn out (or exposed) from the inside of the electronic device 100. According to an embodiment, that the flexible display 120 is drawn out may mean that the second portion 122 of the flexible display 120 is viewable from the outside of the electronic device 100. In another embodiment, when the electronic device 100 is switched from the second state 100b to the first state 100a according to the movement of the second housing 112, the second portion 122 of the flexible display 120 may be drawn in the inside of the electronic device 100. According to an embodiment, that the flexible display 120 is drawn in may mean that the second portion 122 of the flexible display 120 is not viewable from the outside of the electronic device 100.

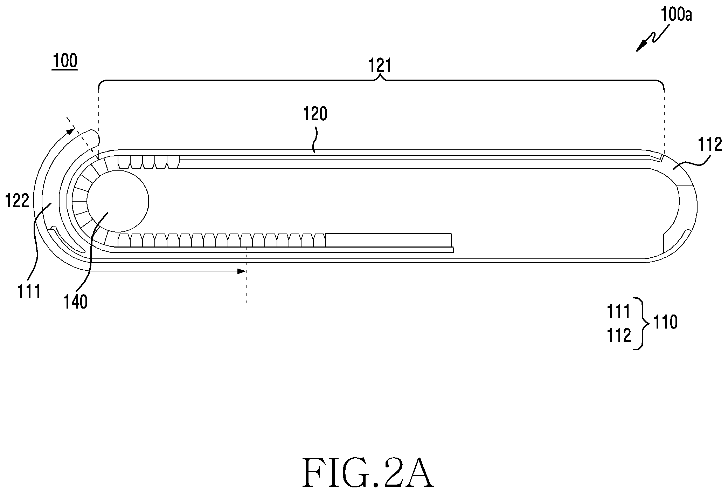

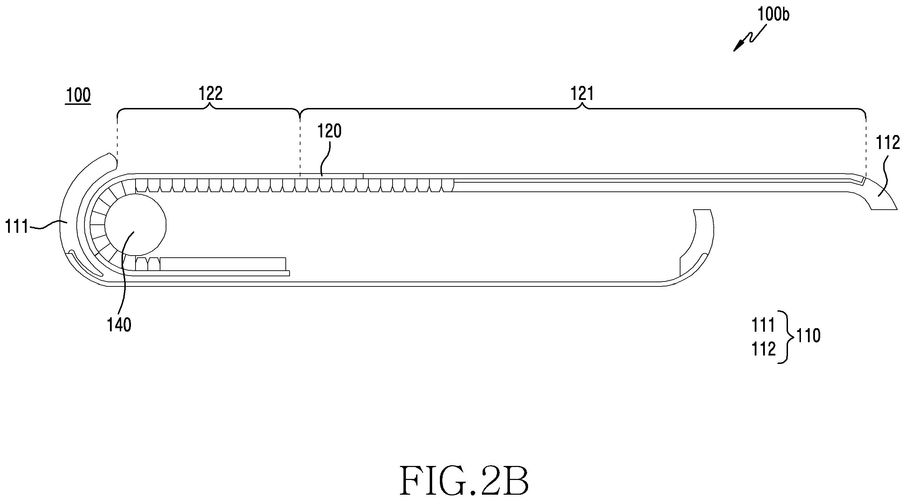

FIG. 2A is a side cross-sectional view of an electronic device of a first state 100a according to an embodiment. FIG. 2B is a side cross-sectional view of an electronic device of a second state 100b according to an embodiment.

FIG. 2A is a cross-sectional view of the electronic device of FIG. 1A taken along line A-A' in an embodiment. FIG. 2B is a cross-sectional view of the electronic device of FIG. 1B taken along line A-A' in an embodiment. In an embodiment, the first state 100a may be referred to as a normal state, a reduced state, or a closed state, and the second state 100b may be referred to as an extended state or an open state.

The electronic device 100 of FIG. 2A and FIG. 2B may include various components. In relation to the description of FIG. 2A and FIG. 2B, contents overlapping with those described above may be simplified or omitted.

Referring to FIG. 2A and FIG. 2B, the electronic device 100 includes a housing 110 which includes a first housing 111 and a second housing 112 slidable relative to the first housing 111. The housing 110 may be extended or reduced according to the sliding of the second housing 112 relative to the first housing 111.

The electronic device 100 includes a flexible display 120. The flexible display 120 may be connected to the second housing 112, and may be extended or reduced according to the sliding of the second housing 112 relative to the first housing 111. For example, when the housing 110 is maximally reduced, the first portion 121 of the flexible display 120 may be exposed to the outside of the electronic device 100, and when the housing 110 is maximally extended, the first portion 121 and the second portion 122 of the flexible display 120 may be exposed to the outside of the electronic device 100.

According to an embodiment, the electronic device 100 may include a rotating structure 140. The rotating structure 140 may move the second housing 112 with respect to the first housing 111. For example, the rotating structure 140 may include a motor, and may extend or reduce the size of the flexible display 120 exposed to the outside of the electronic device 100 by using the motor. According to an embodiment, the flexible display 120 may roll while surrounding the rotating structure 140 according to the relative movement of the first housing 111 and the second housing 112.

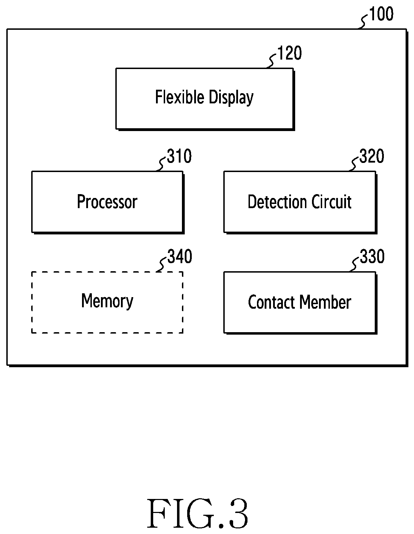

FIG. 3 is a block diagram of an electronic device according to an embodiment.

Referring to FIG. 3, the electronic device 100 includes a flexible display 120, a processor 310, a detection circuit 320, a contact member 330 and/or a memory 340. In various embodiments, the electronic device 100 may include additional components in addition to the components illustrated in FIG. 3, or omit at least one of the components illustrated in FIG. 3.

According to an embodiment, the processor 310 is electrically or operatively connected to the flexible display 120, the detection circuit 320, the contact member 330, and/or the memory 340. According to an embodiment, the processor 310 may execute operations or data processing related to control and/or communication of at least one other component of the electronic device 100 by using instructions stored in the memory 340. According to an embodiment, the processor 310 (e.g., the processor 120 of FIG. 1) may include at least one of a central processing unit (CPU), a graphics processing unit (GPU), a micro controller unit (MCU), a sensor hub, a supplementary processor, a communication processor, an application processor, an application specific integrated circuit (ASIC), and/or field programmable gate arrays (FPGA), and may have a plurality of cores.

According to an embodiment, the processor 310 may control the operation of the rotating structure 140. For example, the processor 310 may deliver a control value to the motor included in the rotating structure, to drive the motor.

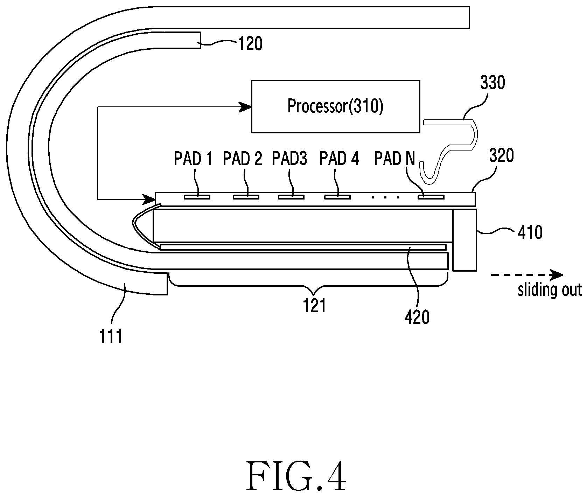

The processor 310 acquires electrical characteristics through the grounding of the detection circuit 320 and the contact member 330. The processor 310 determines an area of the flexible display 120 exposed to the outside, based on the acquired electrical characteristics. An embodiment related to a detailed operation of the processor 310 will be described later with reference to FIG. 4.

According to an embodiment, the flexible display 120 may display various contents (e.g., text, image, video, icon, and/or symbol). According to an embodiment, the flexible display 120 may include a liquid crystal display (LCD), a light emitting diode (LED) display, and/or an organic light emitting diode (OLED) display. According to an embodiment, the flexible display 120 may output a screen having a size corresponding to an area determined to be exposed to the outside. For example, the flexible display 120 may control the area of the flexible display 120 determined to be exposed to the outside, to be in an activated state. Also, the flexible display 120 may control an area other than the area determined to be exposed to the outside, to be in an inactivated state.

According to an embodiment, the detection circuit 320 may include a plurality of conductive pads. The plurality of conductive pads may contact with the contact member 330. According to various embodiments, the detection circuit 320 may be arranged in various forms. For example, the detection circuit 320 may be implemented in the form of a flexible printed circuit board (PCBC), an indium-tin oxide film (ITO) film, or a conductive film.

According to an embodiment, the detection circuit 320 may be formed on or connected to the display rear surface 123 of the flexible display 120. According to another embodiment, the detection circuit 320 may be designed on the rear surface of the housing 110. In various embodiments, the detection circuit 320 may be designed in an appropriate part of the electronic device 100 without being limited to descriptions of various embodiments of the present disclosure. The detection circuit 320 moves in a direction in which the flexible display 120 extends as the second housing 112 moves with respect to the first housing 111.

According to an embodiment, the contact member 330 is connected to the ground. The contact member 330 contacts with any one of the plurality of conductive pads included in the detection circuit 320, at a fixed point within the housing 110. Accordingly, any one of the plurality of conductive pads is connected to the ground through the contact member 330.

Operations of the detection circuit 320 and the contact member 330 of an embodiment will be described later with reference to FIG. 4 to FIG. 8.

According to an embodiment, the memory 340 (e.g., the memory 130 of FIG. 1) may store various data which are acquired by at least one component (e.g., the processor 310) of the electronic device 100 or used in the electronic device 100. For example, the memory 340 may store information on an extended state of the electronic device 100 acquired by the processor 310.

According to an embodiment, the memory 340 may store position information corresponding to each of the plurality of conductive pads included in the detection circuit 320. For example, the memory 340 may store information on each row and column in which the plurality of conductive pads are arranged. In various embodiments, the position information corresponding to each of the plurality of conductive pads may be stored in the memory 340 in various forms without being limited to an example disclosed in the present document.

According to various embodiments, the plurality of conductive pads may use various conductive materials. Also, the shape of each of the plurality of conductive pads may be constructed in various shapes. For example, each of the plurality of conductive pads may have a rectangular, circular, and/or polygonal shape. According to various embodiments, the plurality of conductive pads may be constructed in various sizes. For example, an object contacting with each of the conductive pads may be constructed to have a size capable of recognizing the pad. According to an embodiment, the plurality of conductive pads may be arranged at regular intervals. According to various embodiments, intervals between the plurality of conductive pads may be different depending on the type of the electronic device. According to an embodiment, the plurality of conductive pads may be constructed at different intervals according to respective pad positions. For example, conductive pads positioned in a middle region among the plurality of conductive pads may be arranged at close intervals compared to other conductive pads. According to various embodiments, the positions of the conductive pads arranged at the relatively close intervals may vary.

According to an embodiment, the processor 310 may determine a conductive pad corresponding to the electrical characteristics acquired through the detection circuit 320, acquire position information of the conductive pad through the memory 340, and determine the size of an exposed area of the flexible display 120.

FIG. 4 is a side cross-sectional view of an electronic device for explaining a detection circuit according to an embodiment.

FIG. 4 is a diagram in which a part of the side cross-sectional view of the electronic device 100 described with reference to FIG. 2 is omitted. The construction of the electronic device 100 described with reference to FIG. 2 may also be applied to the electronic device 100 of FIG. 4.

According to an embodiment, a metal frame 410 may move in a direction (sliding out) in which an area of the flexible display 120 exposed to the outside is extended. In an embodiment, the metal frame 410 may correspond to the second housing 112. Also, the metal frame 410 and a support member 420 may be mechanically connected to the flexible display 120. Accordingly, as the metal frame 410 moves, the area of the flexible display 120 exposed to the outside may be extended larger than the first portion 121.

According to an embodiment, the support member 420 may correspond to a plate or multi-bar supporting the rear surface of the flexible display 120. In an embodiment, the support member 420 may support the rear surface of the flexible display 120, thereby preventing the flexible display 120 from being pushed inward after the movement of the metal frame 410.

According to an embodiment, the detection circuit 320 may be positioned on one surface of the metal frame 410. Accordingly, the detection circuit 320 may move as the metal frame 410 moves. In an embodiment, the detection circuit 320 may move in the extended direction (sliding out) as the area of the flexible display 120 exposed to the outside is extended.

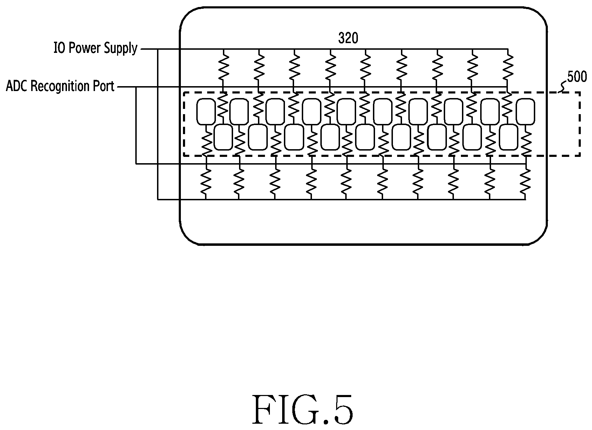

According to an embodiment, the detection circuit 320 includes a plurality of conductive pads (Pad 1 to Pad N). According to an embodiment, the plurality of conductive pads may be disposed on the detection circuit 320 at regular intervals. According to an embodiment, the plurality of conductive pads may be electrically connected to each other. The connection of the plurality of conductive pads of an embodiment will be described later with reference to FIG. 5.

According to an embodiment, the contact member 330 may be fixed to one portion of the first housing 111 and the second housing 112. In an embodiment, the contact member 330 may contact with any one of the plurality of conductive pads at a fixed point. For example, as the detection circuit 320 moves in the extended direction (sliding out), the contact member 330 may sequentially contact with any one of the plurality of conductive pads disposed at regular intervals. The contact member 330 may repeatedly contact with any one of the plurality of conductive pads as the detection circuit 320 moves. Accordingly, the number of times in which the contact member 330 contacts with the plurality of conductive pads may correspond to a range in which the area of the flexible display 120 exposed to the outside is extended.

According to an embodiment, as the contact member 330 repeatedly contacts with any one of the plurality of conductive pads at a fixed point, the pad being in contact with the contact member 330 among the plurality of conductive pads is connected to the ground. The detection circuit 320 delivers, to the processor 310, electrical characteristic data (e.g., an impedance value) generated when the conductive pad is connected to the ground through the contact member 330.

The processor 310 determines a range of the exposed area of the flexible display 120, based on the electrical characteristics acquired through the detection circuit 320. For example, as the metal frame 410 moves, the plurality of conductive pads may sequentially contact with the contact member 330, from Pad N to Pad 1. In an embodiment, the processor 310 may acquire electrical characteristics as the detection circuit 320 is connected to the ground through the contact member 330.

In an embodiment, the metal frame 410 may move together with the flexible display 120 until the contact member 330 is connected to Pad 4. The processor 310 may determine the size of an area of the flexible display 120 exposed to the outside, based on electrical characteristics generated when Pad 4 and the contact member 330 are connected to each other. In another embodiment, the metal frame 410 may move together with the flexible display 120 until the contact member 330 is connected to Pad 1. In this case, the processor 310 may determine the size of an area of the flexible display 120 exposed to the outside, based on electrical characteristics generated when Pad 1 and the contact member 330 are connected to each other. For example, the processor 310 may determine that the area of the flexible display 120 exposed to the outside is extended, when the contact member 330 contacts with Pad 1 compared to when the contact member 330 contacts with Pad 4. According to an embodiment, the processor 310 may determine the size of the area of the flexible display 120 exposed to the outside, and control the flexible display 120 to display a screen, based on this.

According to various embodiments, the operation of determining the size of the area of the flexible display 120 exposed to the outside by using the electrical characteristics acquired through the detection circuit 320 may be performed by the processor 310 or a processor included in a printed circuit board (PCB) of the electronic device 100.

FIG. 5 is a diagram for explaining electrical connection of a plurality of conductive pads included in a detection circuit according to an embodiment.

Referring to FIG. 5, the detection circuit 320 may include a plurality of conductive pads 500. In an embodiment, the detection circuit 320 may include a shadow area which is an area not in contact with the contact member 330. Accordingly, the plurality of conductive pads 500 may be densely arranged to eliminate the shadow area. For example, the plurality of conductive pads 500 may be arranged in a form in which two rows alternate with each other (see for example FIG 5).

According to an embodiment, a memory (e.g., the memory 340 of FIG. 3) may store position information corresponding to each of the plurality of conductive pads 500. According to an embodiment, when the plurality of conductive pads 500 are arranged in a plurality of columns, the electronic device 100 may include additional contact members (not shown) performing at least some of the same function as the contact member (e.g., the contact member 330 of FIG. 3). For example, when the plurality of conductive pads 500 are arranged in two rows, the electronic device 100 may include one additional contact member. Accordingly, the electronic device 100 may bring the additional contact member and/or the contact member 330 into contact with one of the plurality of conductive pads 500, without moving the additional contact member and the contact member 330. For example, when the plurality of conductive pads 500 are arranged in two rows, the electronic device 100 may arrange the contact member 330 and the additional contact member at positions corresponding to respective rows, and bring them into contact with one of the plurality of conductive pads 500.

According to an embodiment, the plurality of conductive pads 500 may be electrically connected using at least one of a resistor, a capacitor, and/or a coil. For example, the plurality of conductive pads 500 may be electrically connected to each other by connecting resistors in series.

According to an embodiment, the detection circuit 320 may include an input output (IO) power supply for electrically connecting the plurality of conductive pads 500. Also, the detection circuit 320 may include an analog-digital converter (ADC) recognition port, in order to acquire, as data, electrical characteristics generated when any one of the plurality of conductive pads 500 is connected to the ground through the contact member 330. A plurality of resistors, capacitors, or coils of the detection circuit 320 may be connected to the IO power supply and the ADC recognition port. For example, the IO power supply may be connected to one port of the plurality of resistors connected to the plurality of conductive pads 500, and the ADC recognition port may be connected between the resistors.

According to an embodiment, values of the plurality of resistors, capacitors, or coils connected to the plurality of conductive pads 500 may be different. Accordingly, all of electrical characteristics generated as the plurality of conductive pads 500 each are connected to the ground may be different. According to an embodiment, the detection circuit 320 may generate different electrical characteristics depending on which of the plurality of conductive pads 500 is connected to the ground. The electrical characteristics may be expressed through at least one of the resistance value, the capacitance value, and the inductance value.

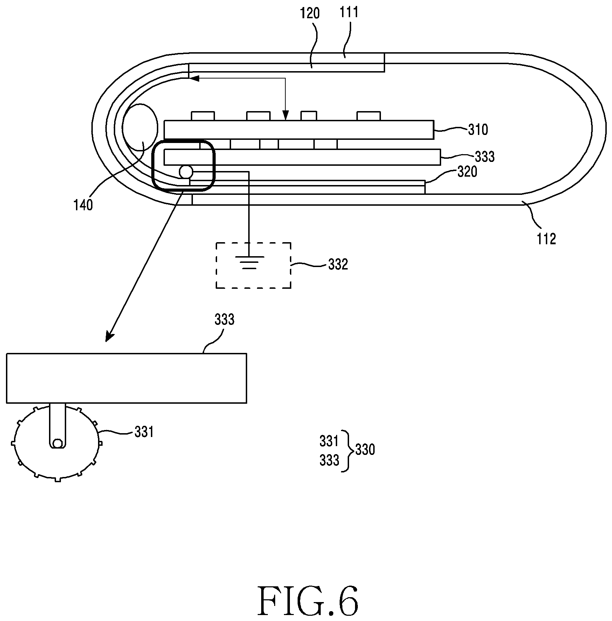

FIG. 6 is a diagram for explaining a contact member of an electronic device according to an embodiment.

FIG. 6 is a diagram in which a part of the side cross-sectional view of the electronic device 100 described with reference to FIG. 2 is omitted. The electronic device 100 of FIG. 6 may include the components of the electronic device 100 described with reference to FIG. 2.

The contact member 330 includes a rotating body structure 331. The rotation body structure 331 is constructed as a structure that rotates as the second housing 112 moves with respect to the first housing 111. According to an embodiment, the rotating body structure 331 may rotate in the same direction as the rotating structure 140. The rotating body structure 331 is electrically connected to the ground 332. Accordingly, a conductive material connected to or in contact with the rotating body structure 331 may be connected to the ground. According to an embodiment, the rotating body structure 331 may be connected to a metal frame 333 at a fixed point within the housing 110. The ground 332 of various embodiments of the present disclosure is a conceptual expression, and is to represent a construction connected to the ground among electric circuits or electrical equipment. For example, the ground 332 is a construction for expressing being grounded.

The rotating body structure 331 is positioned at a fixed point within the housing 110. Accordingly, the rotating body structure 331 may be positioned without being limited to the position of the rotating body structure 331 described in various embodiments of the present disclosure. For example, the rotating body structure 331 may be positioned in an area where the flexible display 120 is drawn out.

According to an embodiment, the flexible display 120 may be positioned between the housing 110 and the detection circuit 320. For example, the detection circuit 320 may be disposed on a rear surface of the flexible display 120. According to an embodiment, as the second housing 112 moves with respect to the first housing 111, the detection circuit 320 may move. Also, the rotating body structure 331 may rotate based on a direction in which the detection circuit 320 moves, and come into contact with the detection circuit 320.

As the rotating body structure 331 rotates, any one of the plurality of conductive pads of the detection circuit 320 contacts with the rotating body structure 331. Accordingly, any one of the plurality of conductive pads is connected to the ground 332. According to an embodiment, as any one of the plurality of conductive pads is connected to the ground 332, the detection circuit 320 may detect electrical characteristics.

A processor (e.g., the processor 310 of FIG. 3) is electrically connected to the detection circuit 320. Accordingly, the processor 310 acquires, from the detection circuit 320, electrical characteristics detected as the rotating body structure 331 rotates. According to an embodiment, as the size of an area of the flexible display 120 exposed to the outside increases, the rotating body structure 331 may rotate several times.

According to an embodiment, the processor 310 may include position information on each of the plurality of conductive pads. In another embodiment, the processor 310 may acquire the position information on the conductive pad, through a memory (e.g., the memory 340 of FIG. 3) which stores the position information on each of the plurality of conductive pads. According to an embodiment, the processor 310 may determine the position information of the conductive pad, based on electrical characteristics generated by contact formed between the rotating body structure 331 and the conductive pad as the second housing 112 and the flexible display 120 are moved. In an embodiment, the processor 310 may acquire, in real time, the position information of the conductive pads contacting as the rotating body structure 331 rotates.

According to an embodiment, the processor 310 may determine the size of an area of the flexible display 120 exposed to the outside, based on the position information of the pad which is in contact with the rotating body structure 331. The processor 310 may control the flexible display 120 to output a screen, based on the size of the area of the flexible display 120 exposed to the outside.

According to an embodiment, the processor 310 may determine position information on each of the plurality of conductive pads included in the detection circuit 320.

The contact member 330 consisting of the rotating body structure 331 of an embodiment may reduce contact friction with the detection circuit 320, compared to a structure of the contact member 330 described with reference to FIG. 4.

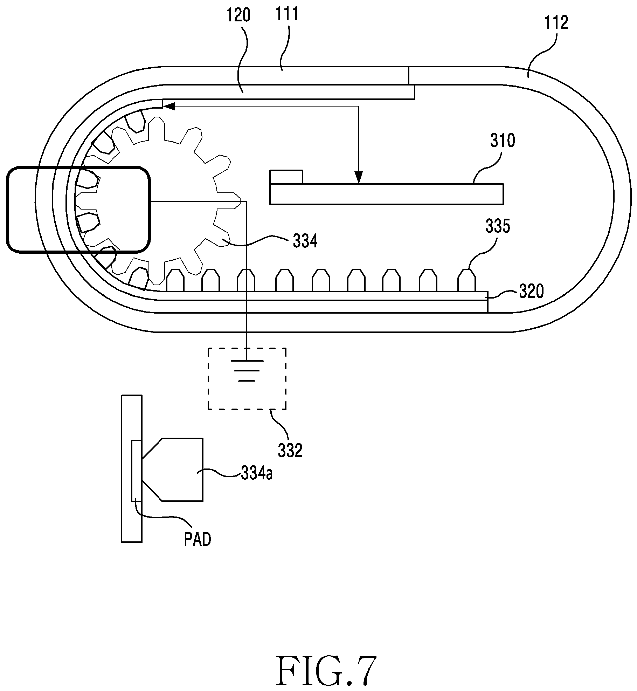

FIG. 7 is a diagram for explaining an electronic device including a driving rail according to an embodiment.

Referring to FIG. 7, the contact member 330 may include a driving rotating body 334 and a driving rail 335. According to an embodiment, the driving rotating body 334 may be connected to the ground 332. Accordingly, a conductive material electrically contacting with the driving rotating body 344 may be connected to the ground 332. According to an embodiment, the driving rail 335 may include a plurality of joint structures and a support plate. According to an embodiment, the shape of a partial region of the plurality of joint structures may be deformed while the state of the electronic device 100 is changed. For example, the partial region of the plurality of joint structures may be bent to have a specified curvature, or be unbent, in a process in which the electronic device 100 is switched from the first state 100a to the second state 100b or is switched from the second state 100b to the first state 100a.

According to another embodiment, the second housing 112 may be fixed or combined to one end of the plurality of joint structures, and a part of the first portion 121 of the flexible display 120 may be disposed at an upper end of the second housing 112. In another example, the support plate may be fixed or coupled to one end of the plurality of joint structures.

According to an embodiment, the driving rotating body 334 may come into contact with the plurality of joint structures of the driving rail 335, and the driving rotating body 334 may move in a specified range of the driving rail 335 by rotation. For example, when the drive rotating body 334 rotates counterclockwise in a process in which the electronic device 100 is switched from the first state 100a to the second state 100b, while a partial region of the plurality of bent joint structures is unbent, the driving rail 335 may move in a first direction (e.g., a direction of getting away from the driving rotating body 334). For another example, when the drive rotating body 334 rotates clockwise in a process in which the electronic device 100 is switched from the second state 100b to the first state 100a, while a partial region of the plurality of unbent joint structures is bent, the driving rail 335 may move in a second direction (e.g., a direction opposite to the first direction). According to an embodiment, in the process of switching the state of the electronic device 100, the shape of the second portion 122 of the flexible display 120 supported by the plurality of joint structures may be deformed to correspond to the shape of the plurality of joint structures.

According to an embodiment, the detection circuit 320 may be designed on a rear surface of the drive rail 335. Accordingly, the detection circuit 320 may move in the same direction as the driving rail 335 moves. According to another embodiment, the detection circuit 320 may be designed on the display rear surface 123 of the flexible display 120. Similarly, the detection circuit 320 may move in the same direction as the flexible display 120 moves.

According to an embodiment, the detection circuit 320 may contact with the driving rotating body 334 as the detection circuit 320 moves along with the driving rail 335. According to an embodiment, the driving rotating body 334 may contact with the detection circuit 320 at one part, based on a specified curvature of the housing 110 and the flexible display 120. For example, one joint 334a among a plurality of joints included in the driving rotation body 334 may contact with the detection circuit 320.

In an embodiment, any one of a plurality of conductive pads included in the detection circuit 320 may contact with one joint 334a of the driving rotation body 334. Any one of the plurality of conductive pads may be connected to the ground 332 as any one of the plurality of conductive pads contacts with the driving rotating body 334. According to an embodiment, the conductive pad and the driving rotating body 334 may contact with each other in one area where the driving rotating body 334 and the driving rail 335 are engaged. For example, one joint 334a among the joints of the driving rotating body 334 may contact with the conductive pad. As the conductive pad contacts with one joint 334a, the conductive pad may be connected to the ground 332, and the detection circuit 320 may generate electrical characteristics as described with reference to FIG. 5.

According to an embodiment, the processor 310 may determine electrical characteristics generated based on the fact that any one of the plurality of conductive pads included in the detection circuit 320 is connected to the ground 332 through the driving rotating body 334. In an embodiment, the processor 310 may acquire position information of the pad contacting with the driving rotating body 334, based on the electrical characteristics. Accordingly, the processor 310 may determine an opening amount of the flexible display 120, based on the position information of the conductive pad.

According to an embodiment, as the driving rotating body 334 rotates counterclockwise, the driving rotating body 334 may repeatedly perform an operation of contacting with any one of the plurality of conductive pads. As the opening amount of the flexible display 120 increases, the number of repetitions of the above operation may increase. According to another embodiment, as the driving rotating body 334 rotates clockwise, the driving rotating body 334 may repeatedly perform an operation of contacting with any one of the plurality of conductive pads. As the opening amount of the flexible display 120 decreases, the number of repetitions of the above operation may increase.

The processor 310 of an embodiment may receive, in real time, electrical characteristics generated as the driving rotating body 334 and the conductive pad contact with each other from the detection circuit 320, and determine the opening amount of the flexible display 120. Also, the processor 310 may receive, in real time, the electrical characteristics generated as the driving rotating body 334 and the conductive pad contact with each other from the detection circuit 320, and determine the opening amount of the flexible display 120.

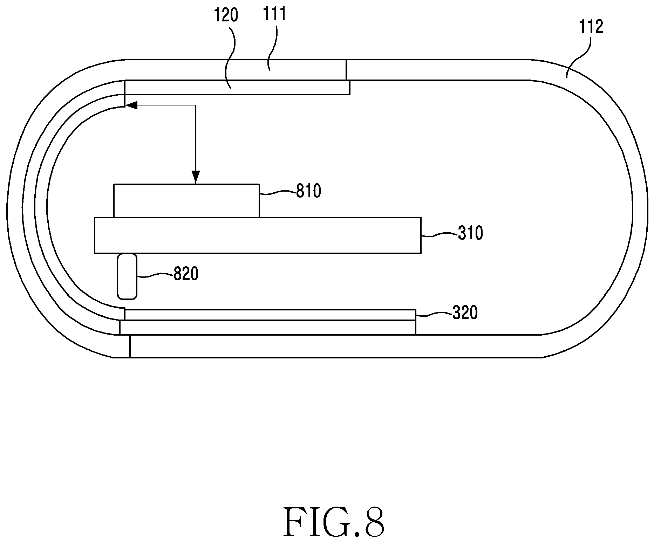

FIG. 8 is a diagram for explaining an electronic device including a touch circuit according to an embodiment.

Referring to FIG. 8, the electronic device 100 of an embodiment may include a touch circuit 810 and a conductive touch member 820.

According to an embodiment, the flexible display 120 may include a touch sensor configured to detect a touch, or a pressure sensor configured to measure the intensity of force generated by the touch. In an embodiment, the touch circuit 810 may be integrated into the touch sensor included in the flexible display 120. According to another embodiment, the electronic device 100 may include the touch sensor included in the flexible display 120, and a separate touch circuit 810.

The touch circuit 810 of an embodiment may include a touch sensor and a touch sensor IC. In an embodiment, the touch circuit 810 may sense a touch, through the touch sensor configured to sense a touch and the touch sensor IC. According to an embodiment, the touch may occur through the conductive touch member 820. According to an embodiment, the conductive touch member 820 may be electrically connected to the touch circuit 810. Accordingly, the touch circuit 810 may receive an electrical signal related to the touch from the conductive touch member 820, and sense the touch. According to an embodiment, the touch circuit 810 and the conductive touch member 820 may be electrically connected to and exchange electrical signals with the processor 310.

According to an embodiment, the conductive touch member 820 may be fixed within the housing 110. For example, the conductive touch member 820 may be fixed to a portion where the flexible display 120 is drawn out as the second housing 112 moves with respect to the first housing 111. In an embodiment, the conductive touch member 820 may generate an electrical signal as the conductive touch member 820 approaches any one of the plurality of conductive pads included in the detection circuit 320. For example, the conductive touch member 820 may generate an electrical signal when the conductive touch member 820 contacts with, or approaches any one of the plurality of conductive pads at a predetermined distance or more.

According to an embodiment, the detection circuit 320 may be disposed on a rear surface of the flexible display 120. Accordingly, as the flexible display 120 moves, an operation in which any one of the plurality of conductive pads included in the detection circuit 320 generates an electrical signal with the conductive touch member 820 may be repeatedly performed. In an embodiment, the touch circuit 810 may receive the generated electrical signal through the conductive touch member 820 and any one of the plurality of conductive pads. The touch circuit 810 may deliver the electrical signal to the processor 310, and the processor 310 may determine the size of an area of the flexible display 120 exposed to the outside, based on the electrical signal.

According to an embodiment, when the conductive touch member 820 contacts with and/or approaches different conductive pads, different electrical signals may be generated. Accordingly, as the detection circuit 320 moves in a direction in which the opening amount of the flexible display 120 increases or decreases, the touch circuit 810 may acquire different electrical signals in real time. The processor 310 may determine the pad generating the electrical signal with the conductive touch member 820, through the electrical signal, based on the plurality of conductive pads each generating the different electrical signals.

In an embodiment, a memory (e.g., the memory 340 of FIG. 3) may store position information on each of the plurality of conductive pads included in the detection circuit 320. According to an embodiment, the processor 310 may acquire position information on any one pad generating an electrical signal with the conductive touch member 820, among the plurality of conductive pads, and determine the opening amount of the flexible display 120, based on the position information. According to an embodiment, the processor 310 may display a screen, based on the size of an area of the flexible display 120 exposed to the outside. For example, the processor 310 may control the area of the flexible display 120 exposed to the outside to be in an activated state, and control areas of the flexible display 120 other than the area exposed to the outside to be in an inactivated state.

According to an embodiment, the plurality of conductive pads included in the detection circuit 320 may be arranged in a plurality of columns and/or a plurality of rows. For example, as in the detection circuit 320 described with reference to FIG. 5, the plurality of conductive pads may be arranged in a form in which two columns alternate with each other. According to an embodiment, the conductive touch member 820 may be disposed to generate an electrical signal with any one of the plurality of conductive pads arranged in the plurality of columns and/or the plurality of rows.

According to an embodiment, when the touch circuit 810 is integrated into the touch sensor, the processor 310 may distinguish a touch detected by the flexible display 120 and a touch detected by the conductive touch member 820. For example, the processor 310 may determine a coordinate of the detected touch, and based on the determined coordinate, may determine whether the touch is based on the detection circuit 320 and the conductive touch member 820 or is detected through the flexible display 120. In an embodiment, the processor 310 may use the touch being based on the detection circuit 320 and the conductive touch member 820, so as to determine an area of the flexible display 120 exposed to the outside.

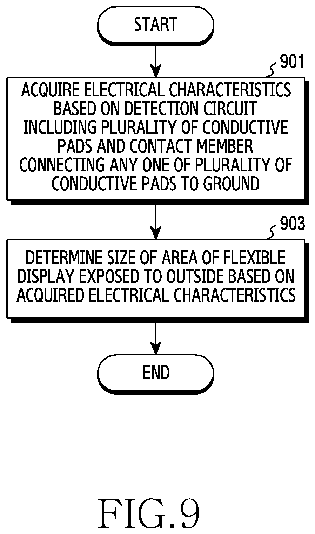

FIG. 9 is a flowchart for explaining an operation of an electronic device according to an embodiment.

Referring to FIG. 9, in operation 901, the processor 310 of the electronic device 100 acquires electrical characteristics, based on the detection circuit 320 and the contact member 330. The detection circuit 320 moves according to the movement of the housing 110 surrounding the flexible display 120, and include the plurality of conductive pads. Accordingly, the plurality of conductive pads move together as the detection circuit 320 moves. The contact member 330 is connected to the ground, and contact with any one of the plurality of conductive pads at a fixed position within the housing 110. Accordingly, as the contact member 330 and any one of the plurality of conductive pads contact with each other, the contacted conductive pad is connected to the ground. For example, as the contact member 330 fixed to a portion in which the flexible display 120 is drawn out contacts with any one of the plurality of conductive pad, electrical characteristics is generated. The processor 310 acquires the electrical characteristics.

According to an embodiment, in operation 903, the processor 310 determines the size of an area of the flexible display 120 exposed to the outside, based on the acquired electrical characteristics. In an embodiment, the processor 310 may determine a position of the conductive pad contacting with the contact member 330, based on the electrical characteristics. Since the plurality of conductive pads move along with the movement of the flexible display 120, the opening amount of the flexible display 120 may be determined based on the position of the conductive pad contacting with the contact member 330 of a fixed position.

According to an embodiment, the processor 310 may acquire in real time the electrical characteristics generated as the detection circuit 320 moves, and based on the acquired electrical characteristics, may determine in real time the size of an area of the flexible display 120 exposed to the outside. Accordingly, the processor 310 may display a screen corresponding to the determined opening amount of the flexible display 120 through the flexible display 120.

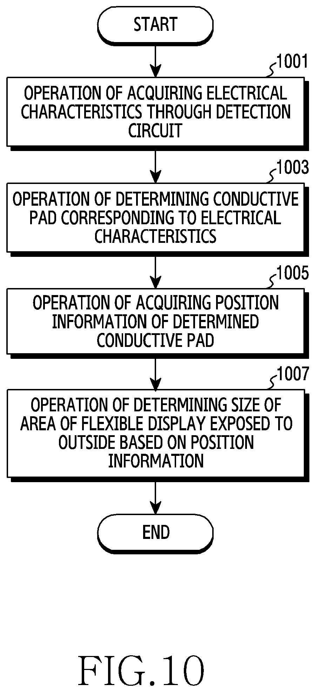

FIG. 10 is a flowchart for explaining an operation of an electronic device including a rotating body structure according to an embodiment.

According to an embodiment, in operation 1001, the processor 310 may acquire electrical characteristics generated as the rotating body structure 331 contacts with any one of the plurality of conductive pads of the detection circuit 320. According to an embodiment, in order to acquire the electrical characteristics, any one of the plurality of conductive pads may be connected to the ground. For example, as the housing 110 moves, the rotating body structure 331 included in the contact member 330 of the electronic device 100 rotates, whereby any one of the plurality of conductive pads of the detection circuit 320 may be connected to the ground. In an embodiment, the rotating body structure 331 may be connected to the ground, and a conductive material contacting with the rotating body structure 331 may be connected to the ground. According to an embodiment, the rotating body structure 331 may contact with the detection circuit 320 at a fixed position within the housing 110. According to an embodiment, the rotating body structure 331 may be shown as the driving rotating body 334 and the driving rail 335.

In an embodiment, when each of the plurality of conductive pads contacts with the rotating body structure 331, each of the conductive pads may generate electrical characteristics that are based on a position of the conductive pad. Accordingly, in operation 1003, the processor 310 may determine a conductive pad corresponding to the electrical characteristics, based on the electrical characteristics acquired through the detection circuit 320. According to an embodiment, in operation 1005, the processor 310 may acquire position information of the conductive pad. According to an embodiment, the processor 310 may refer to position information corresponding to each of the plurality of conductive pads stored in the memory 340, in order to acquire the position information of the conductive pad.

According to an embodiment, in operation 1007, the processor 310 may determine the size of an area of the flexible display 120 exposed to the outside, based on the position information of the conductive pad. Through this, the processor 310 may display a screen corresponding to the size of the area of the flexible display 120 exposed to the outside through the flexible display 120.

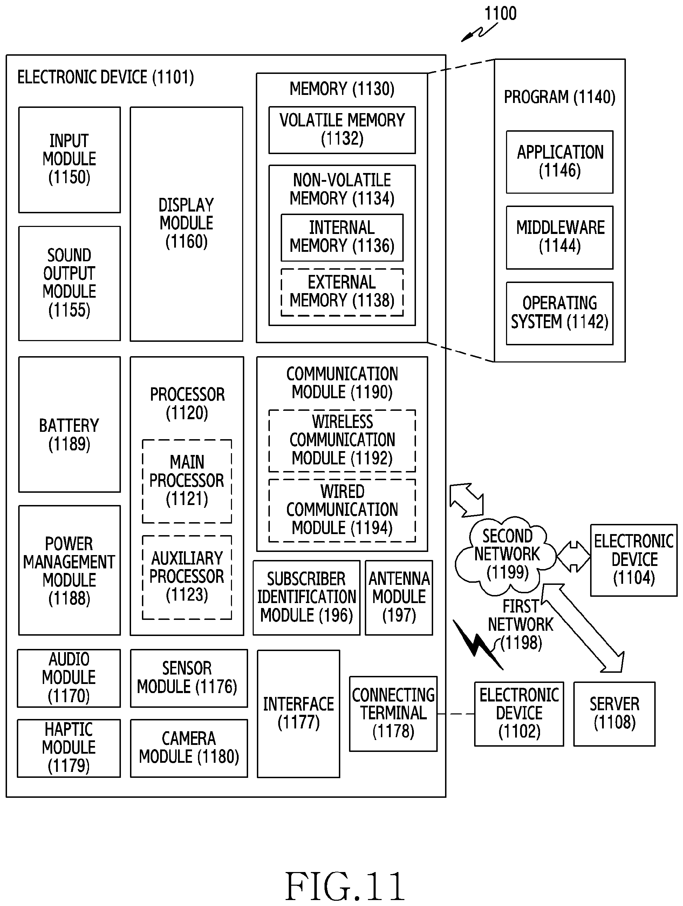

Fig. 11 is a block diagram illustrating an electronic device 1101 in a network environment 1100 according to various embodiments.

Referring to Fig. 11, the electronic device 1101 in the network environment 1100 may communicate with an electronic device 1102 via a first network 1198 (e.g., a short-range wireless communication network), or at least one of an electronic device 1104 or a server 1108 via a second network 1199 (e.g., a long-range wireless communication network). According to an embodiment, the electronic device 1101 may communicate with the electronic device 1104 via the server 1108. According to an embodiment, the electronic device 1101 may include a processor 1120, memory 1130, an input module 1150, a sound output module 1155, a display module 1160, an audio module 1170, a sensor module 1176, an interface 1177, a connecting terminal 1178, a haptic module 1179, a camera module 1180, a power management module 1188, a battery 1189, a communication module 1190, a subscriber identification module(SIM) 1196, or an antenna module 1197. In some embodiments, at least one of the components (e.g., the connecting terminal 1178) may be omitted from the electronic device 1101, or one or more other components may be added in the electronic device 1101. In some embodiments, some of the components (e.g., the sensor module 1176, the camera module 1180, or the antenna module 1197) may be implemented as a single component (e.g., the display module 1160).

The processor 1120 may execute, for example, software (e.g., a program 1140) to control at least one other component (e.g., a hardware or software component) of the electronic device 1101 coupled with the processor 1120, and may perform various data processing or computation. According to one embodiment, as at least part of the data processing or computation, the processor 1120 may store a command or data received from another component (e.g., the sensor module 1176 or the communication module 1190) in volatile memory 1132, process the command or the data stored in the volatile memory 1132, and store resulting data in non-volatile memory 1134. According to an embodiment, the processor 1120 may include a main processor 1121 (e.g., a central processing unit (CPU) or an application processor (AP)), or an auxiliary processor 1123 (e.g., a graphics processing unit (GPU), a neural processing unit (NPU), an image signal processor (ISP), a sensor hub processor, or a communication processor (CP)) that is operable independently from, or in conjunction with, the main processor 1121. For example, when the electronic device 1101 includes the main processor 1121 and the auxiliary processor 1123, the auxiliary processor 1123 may be adapted to consume less power than the main processor 1121, or to be specific to a specified function. The auxiliary processor 1123 may be implemented as separate from, or as part of the main processor 1121.

The auxiliary processor 1123 may control at least some of functions or states related to at least one component (e.g., the display module 1160, the sensor module 1176, or the communication module 1190) among the components of the electronic device 1101, instead of the main processor 1121 while the main processor 1121 is in an inactive (e.g., sleep) state, or together with the main processor 1121 while the main processor 1121 is in an active state (e.g., executing an application). According to an embodiment, the auxiliary processor 1123 (e.g., an image signal processor or a communication processor) may be implemented as part of another component (e.g., the camera module 1180 or the communication module 1190) functionally related to the auxiliary processor 1123. According to an embodiment, the auxiliary processor 1123 (e.g., the neural processing unit) may include a hardware structure specified for artificial intelligence model processing. An artificial intelligence model may be generated by machine learning. Such learning may be performed, e.g., by the electronic device 1101 where the artificial intelligence is performed or via a separate server (e.g., the server 1108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1130 may store various data used by at least one component (e.g., the processor 1120 or the sensor module 1176) of the electronic device 1101. The various data may include, for example, software (e.g., the program 1140) and input data or output data for a command related thererto. The memory 1130 may include the volatile memory 1132 or the non-volatile memory 1134.

The program 1140 may be stored in the memory 1130 as software, and may include, for example, an operating system (OS) 1142, middleware 1144, or an application 1146.

The input module 1150 may receive a command or data to be used by another component (e.g., the processor 1120) of the electronic device 1101, from the outside (e.g., a user) of the electronic device 1101. The input module 1150 may include, for example, a microphone, a mouse, a keyboard, a key (e.g., a button), or a digital pen (e.g., a stylus pen).

The sound output module 1155 may output sound signals to the outside of the electronic device 1101. The sound output module 1155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1160 may visually provide information to the outside (e.g., a user) of the electronic device 1101. The display module 1160 may include, for example, a display, a hologram device, or a projector and control circuitry to control a corresponding one of the display, hologram device, and projector. According to an embodiment, the display module 1160 may include a touch sensor adapted to detect a touch, or a pressure sensor adapted to measure the intensity of force incurred by the touch.

The audio module 1170 may convert a sound into an electrical signal and vice versa. According to an embodiment, the audio module 1170 may obtain the sound via the input module 1150, or output the sound via the sound output module 1155 or a headphone of an external electronic device (e.g., an electronic device 1102) directly (e.g., wiredly) or wirelessly coupled with the electronic device 1101.

The sensor module 1176 may detect an operational state (e.g., power or temperature) of the electronic device 1101 or an environmental state (e.g., a state of a user) external to the electronic device 1101, and then generate an electrical signal or data value corresponding to the detected state. According to an embodiment, the sensor module 1176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1177 may support one or more specified protocols to be used for the electronic device 1101 to be coupled with the external electronic device (e.g., the electronic device 1102) directly (e.g., wiredly) or wirelessly. According to an embodiment, the interface 1177 may include, for example, a high definition multimedia interface (HDMI), a universal serial bus (USB) interface, a secure digital (SD) card interface, or an audio interface.

A connecting terminal 1178 may include a connector via which the electronic device 1101 may be physically connected with the external electronic device (e.g., the electronic device 1102). According to an embodiment, the connecting terminal 1178 may include, for example, a HDMI connector, a USB connector, a SD card connector, or an audio connector (e.g., a headphone connector).

The haptic module 1179 may convert an electrical signal into a mechanical stimulus (e.g., a vibration or a movement) or electrical stimulus which may be recognized by a user via his tactile sensation or kinesthetic sensation. According to an embodiment, the haptic module 1179 may include, for example, a motor, a piezoelectric element, or an electric stimulator.

The camera module 1180 may capture a still image or moving images. According to an embodiment, the camera module 1180 may include one or more lenses, image sensors, image signal processors, or flashes.

The power management module 1188 may manage power supplied to the electronic device 1101. According to one embodiment, the power management module 1188 may be implemented as at least part of, for example, a power management integrated circuit (PMIC).

The battery 1189 may supply power to at least one component of the electronic device 1101. According to an embodiment, the battery 1189 may include, for example, a primary cell which is not rechargeable, a secondary cell which is rechargeable, or a fuel cell.

The communication module 1190 may support establishing a direct (e.g., wired) communication channel or a wireless communication channel between the electronic device 1101 and the external electronic device (e.g., the electronic device 1102, the electronic device 1104, or the server 1108) and performing communication via the established communication channel. The communication module 1190 may include one or more communication processors that are operable independently from the processor 1120 (e.g., the application processor (AP)) and supports a direct (e.g., wired) communication or a wireless communication. According to an embodiment, the communication module 1190 may include a wireless communication module 1192 (e.g., a cellular communication module, a short-range wireless communication module, or a global navigation satellite system (GNSS) communication module) or a wired communication module 1194 (e.g., a local area network (LAN) communication module or a power line communication (PLC) module). A corresponding one of these communication modules may communicate with the external electronic device via the first network 1198 (e.g., a short-range communication network, such as BluetoothTM, wireless-fidelity (Wi-Fi) direct, or infrared data association (IrDA)) or the second network 1199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1192 may identify and authenticate the electronic device 1101 in a communication network, such as the first network 1198 or the second network 1199, using subscriber information (e.g., international mobile subscriber identity (IMSI)) stored in the subscriber identification module 1196.

The wireless communication module 1192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1192 may support a high-frequency band (e.g., the mmWave band) to achieve, e.g., a high data transmission rate. The wireless communication module 1192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1192 may support various requirements specified in the electronic device 1101, an external electronic device (e.g., the electronic device 1104), or a network system (e.g., the second network 1199). According to an embodiment, the wireless communication module 1192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1197 may transmit or receive a signal or power to or from the outside (e.g., the external electronic device) of the electronic device 1101. According to an embodiment, the antenna module 1197 may include an antenna including a radiating element composed of a conductive material or a conductive pattern formed in or on a substrate (e.g., a printed circuit board (PCB)). According to an embodiment, the antenna module 1197 may include a plurality of antennas (e.g., array antennas). In such a case, at least one antenna appropriate for a communication scheme used in the communication network, such as the first network 1198 or the second network 1199, may be selected, for example, by the communication module 1190 (e.g., the wireless communication module 1192) from the plurality of antennas. The signal or the power may then be transmitted or received between the communication module 1190 and the external electronic device via the selected at least one antenna. According to an embodiment, another component (e.g., a radio frequency integrated circuit (RFIC)) other than the radiating element may be additionally formed as part of the antenna module 1197.

According to various embodiments, the antenna module 1197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1101 and the external electronic device 1104 via the server 1108 coupled with the second network 1199. Each of the electronic devices 1102 or 1104 may be a device of a same type as, or a different type, from the electronic device 1101. According to an embodiment, all or some of operations to be executed at the electronic device 1101 may be executed at one or more of the external electronic devices 1102, 1104, or 1108. For example, if the electronic device 1101 should perform a function or a service automatically, or in response to a request from a user or another device, the electronic device 1101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1101. The electronic device 1101 may provide the outcome, with or without further processing of the outcome, as at least part of a reply to the request. To that end, a cloud computing, distributed computing, mobile edge computing (MEC), or client-server computing technology may be used, for example. The electronic device 1101 may provide ultra low-latency services using, e.g., distributed computing or mobile edge computing. In another embodiment, the external electronic device 1104 may include an internet-of-things (IoT) device. The server 1108 may be an intelligent server using machine learning and/or a neural network. According to an embodiment, the external electronic device 1104 or the server 1108 may be included in the second network 1199. The electronic device 1101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1140) including one or more instructions that are stored in a storage medium (e.g., internal memory 1136 or external memory 1138) that is readable by a machine (e.g., the electronic device 1101). For example, a processor (e.g., the processor 1120) of the machine (e.g., the electronic device 1101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

As described above, an electronic device (e.g., the electronic device 100 of FIG. 1) of an embodiment includes a housing including a first housing (e.g., the first housing 111 of FIG. 1) and a second housing (e.g., the second housing 112 of FIG. 1) that is movable relative to the first housing, a flexible display (e.g., the flexible display 120 of FIG. 3) exposed to the outside of the electronic device through a part of the housing, the flexible display having an area which is exposed to the outside and which changes as the second housing moves with respect to the first housing, a detection circuit which moves according to the movement of the second housing and which includes a plurality of conductive pads, a contact member (e.g., the contact member 330 of FIG. 3) which connects any one of the plurality of conductive pads to the ground at a fixed point within the housing, and at least one processor (e.g., the processor 310 of FIG. 3) electrically connected to the flexible display and the detection circuit. The at least one processor determines the size of the area exposed to the outside, based on electrical characteristics acquired through the detection circuit.

The at least one processor of an embodiment may display a screen through the flexible display, based on the size of the area exposed to the outside.

According to an embodiment, the fixed point within the housing may be a point at which the flexible display is exposed to the outside as the second housing moves with respect to the first housing.

The contact member of an embodiment may include a rotating body structure, and as the second housing moves, the rotating body structure may rotate, and connect any one of the plurality of conductive pads to the ground at the fixed point within the housing.

In an embodiment, the electronic device may include a driving rail which moves along with the movement of the detection circuit and engages with the rotating body structure, and the contact member may connect any one of the plurality of conductive pads to the ground in a region where the driving rail and the rotating body structure are engaged with each other.

According to an embodiment, the plurality of conductive pads may be arranged in a plurality of columns, and the electronic device may include an additional contact member connecting any one of the plurality of conductive pads to the ground at a fixed point within the housing correspondingly to the arrangement of the plurality of conductive pads.

In an embodiment, the electronic device may further include a memory storing position information corresponding to each of the plurality of conductive pads.

According to an embodiment, the at least one processor may acquire position information of a conductive pad connected to the ground among the position information, based on the electrical characteristics, and determine the size of the area exposed to the outside, based on the position information.

In an embodiment, the electrical characteristics may be expressed through at least one of a resistance value, a capacitance value, and an inductance value.

As described above, a method of operating an electronic device having a flexible display (e.g., the flexible display 120 of FIG. 3) exposed to the outside of the electronic device (e.g., the electronic device 100 of FIG. 1) through a part of a housing (e.g., the housing 110 of FIG. 1) of an embodiment includes the operations of acquiring electrical characteristics, based on a detection circuit which moves according to the movement of the housing and includes a plurality of conductive pads and a contact member which connects any one of the plurality of conductive pads to the ground at a fixed point of the electronic device, and determining the size of an area whose flexible display is exposed to the outside, based on the acquired electrical characteristics.

According to an embodiment, the electronic device may further include a memory for storing position information corresponding to each of the plurality of conductive pads, and the operation of determining the size of the area whose flexible display is exposed to the outside may include the operations of determining a conductive pad corresponding to the electrical characteristics among the plurality of conductive pads, acquiring position information of the conductive pad among the position information, and determining the size of the area whose flexible display is exposed to the outside, based on the position information.

The method of operating the electronic device of an embodiment may further include the operation of displaying, through the flexible display, a screen corresponding to the size of the area exposed to the outside.

According to an embodiment, the contact member may include a rotating body structure, and the operation of acquiring the electrical characteristics may include the operations of, by rotating the rotating body structure as the housing moves, connecting any one of the plurality of conductive pads to the ground, and acquiring the electrical characteristics through the detection circuit, based on the operation of connecting to the ground.

According to an embodiment, the plurality of conductive pads may be arranged in a plurality of columns in the detection circuit, and the electronic device may further include an additional contact member connecting any one of the plurality of conductive pads to the ground at a fixed point within the housing correspondingly to the arrangement of the plurality of conductive pads.

In an embodiment, the electrical characteristics may be expressed through at least one of a resistance value, a capacitance value, and an inductance value.

As described above, an electronic device (e.g., the electronic device 100 of FIG. 1) of an embodiment may include a housing including a first housing (e.g., the first housing 111 of FIG. 1) and a second housing (e.g., the second housing 112 of FIG. 1) that is movable relative to the first housing, a flexible display (e.g., the flexible display 120 of FIG. 3) exposed to the outside of the electronic device through a part of the housing, the flexible display having an area which is exposed to the outside and which changes as the second housing moves with respect to the first housing, a detection circuit (e.g., the detection circuit 20 of FIG. 3) which moves according to the movement of the second housing and which includes a plurality of conductive pads, a touch circuit (e.g., the touch circuit 810 of FIG. 8) including a touch sensor an a touch sensor IC, a conductive touch member (e.g., the conductive touch member 820 of FIG. 8) which generates an electrical signal with any one of the plurality of conductive pads at a fixed point of the electronic device through the touch circuit, and at least one processor (e.g., the processor 310 of FIG. 3) electrically connected to the flexible display and the detection circuit. The at least one processor may determine the size of the area exposed to the outside, based on the electrical signal acquired using the conductive touch member and the touch circuit according to the movement of the detection circuit.

According to an embodiment, the fixed point within the housing may be a point at which the flexible display is exposed to the outside as the second housing moves with respect to the first housing.

In an embodiment, the electronic device may further include a memory storing position information corresponding to each of the plurality of conductive pads, and the at least one processor may determine the size of the area exposed to the outside by using position information corresponding to the electrical signal among the position information.

According to an embodiment, the plurality of conductive pads may be arranged in a plurality of columns, and the electronic device may include an additional contact member generating an electrical signal with any one of the plurality of conductive pads at a fixed point within the housing correspondingly to the arrangement of the plurality of conductive pads.

In an embodiment, the at least one processor may output a guidance corresponding the size of the area exposed to the outside through the flexible display.

## Claims

1. An electronic device, comprising:
a housing (110) comprising a first housing (111) and a second housing (112) that is movable relative to the first housing (111);
a flexible display (120) exposed to outside of the electronic device through a part of the housing (110), the flexible display (120) having an area which is exposed to the outside and a size of the area changes as the second housing (112) moves with respect to the first housing (111);
a detection circuit (320) configured to move according to the movement of the second housing (112) and which comprises a plurality of conductive pads (PAD1, ..., PADN; 500);
a rotating body structure (331) positioned at a point within the housing (110) and configured to connect any one of the plurality of conductive pads (PAD1, ..., PADN; 500) to the ground (332) by rotating as the second housing (112) moves with respect to the first housing (111); and
at least one processor (310) electrically connected to the flexible display (120) and the detection circuit (320),
wherein the at least one processor (310) is configured to determine the size of the area exposed to the outside, based on electrical characteristics acquired through the detection circuit (320).

2. The electronic device of claim 1, wherein the at least one processor (310) is configured to display a screen through the flexible display (120) based on the size of the area exposed to the outside.

3. The electronic device of claim 1, wherein the point within the housing (110) is a point at which the flexible display (120) is exposed to the outside as the second housing (112) moves with respect to the first housing (111).

4. The electronic device of claim 1, wherein the electronic device comprises a driving rail (335) which is configured to move along with the movement of the detection circuit (320) and is engaged with the rotating body structure (331), and
the rotating body structure (331) connects any one of the plurality of conductive pads (PAD1, ..., PADN; 500) to the ground (332) in a region where the driving rail (335) and the rotating body structure (331) are engaged with each other.

5. The electronic device of claim 1, wherein the plurality of conductive pads (PAD1, ..., PADN; 500) are arranged in a plurality of columns, and
the electronic device comprises an additional contact member connecting any one of the plurality of conductive pads (PAD1, ..., PADN; 500) to the ground (332) at another point within the housing (110) which corresponds to the arrangement of the plurality of conductive pads (PAD1, ..., PADN; 500).

6. The electronic device of claim 1, wherein the electronic device further comprises memory (340) configured to store position information corresponding to each of the plurality of conductive pads (PAD1, ..., PADN; 500).

7. The electronic device of claim 6, wherein the at least one processor (310) is configured to:
acquire position information of a conductive pad connected to the ground (332) among the position information, based on the electrical characteristics; and
determine the size of the area exposed to the outside, based on the acquired position information.

8. The electronic device of claim 1, wherein the electrical characteristics are expressed through at least one of a resistance value, a capacitance value, and an inductance value.

9. A method of operating an electronic device comprising a flexible display (120) exposed to outside of the electronic device through a part of a housing (110), the housing (110) comprising a first housing (111) and a second housing (112) that is movable relative to the first housing (111) and the flexible display (120) having an area which is exposed to the outside and a size of the area changes as the second housing (112) moves with respect to the first housing (111), the method comprising:
acquiring (901) electrical characteristics, based on a detection circuit (320) which moves according to the movement of the second housing (112) and comprises a plurality of conductive pads (PAD1, ..., PADN; 500) and a rotating body structure (331) which is positioned at a point within the housing (110) and connects any one of the plurality of conductive pads (PAD1, ..., PADN) to the ground (332) by rotating as the second housing (112) moves with respect to the first housing (111); and
determining (903) the size of the area whose flexible display (120) is exposed to the outside, based on the acquired electrical characteristics.

10. The method of claim 9, wherein the electronic device further comprises memory (340) for storing position information corresponding to each of the plurality of conductive pads (PAD1, ..., PADN; 500), and
determining (903) the size of the area whose flexible display (120) is exposed to the outside comprises:
determining (1003) a conductive pad (PAD1, ..., PADN; 500) corresponding to the electrical characteristics among the plurality of conductive pads (PAD1, ..., PADN; 500);
acquiring (1005) position information of the conductive pad (PAD1, ..., PADN) among the position information; and
determining (1007) the size of the area whose flexible display (120) is exposed to the outside, based on the acquired position information.

11. The method of claim 9, further comprising displaying, through the flexible display (120), a screen corresponding to the size of the area exposed to the outside.

12. The method of claim 9, wherein acquiring the electrical characteristics comprises:
connecting any one of the plurality of conductive pads (PAD1, ..., PADN; 500) to the ground (332) in a region where a driving rail (335) and the rotating body structure (331) are engaged with each other, wherein the driving rail (335) is configured to move along with the movement of the detection circuit (320) and is engaged with the rotating body structure (331); and
acquiring the electrical characteristics through the detection circuit (320), based on connecting to the ground (332).

13. The method of claim 9, wherein the plurality of conductive pads (PAD1, ..., PADN; 500) are arranged in a plurality of columns in the detection circuit (320), and
the electronic device further comprises an additional contact member connecting any one of the plurality of conductive pads (PAD1, ..., PADN; 500) to the ground (332) at another point within the housing (110) which corresponds to the arrangement of the plurality of conductive pads (PAD1, ..., PADN; 500).

14. The method of claim 9, wherein the electrical characteristics are expressed through at least one of a resistance value, a capacitance value, and an inductance value.

## Patentansprüche

1. Elektronische Vorrichtung, umfassend:
ein Gehäuse (110) mit einem ersten Gehäuse (111) und einem zweiten Gehäuse (112), das relativ zu dem ersten Gehäuse (111) beweglich ist;
eine flexible Anzeige (120), die durch einen Teil des Gehäuses (110) zu Außenseite der elektronischen Vorrichtung freiliegt, wobei die flexible Anzeige (120) einen Bereich aufweist, der zu der Außenseite freiliegt, und sich eine Größe des Bereichs ändert, wenn sich das zweite Gehäuse (112) relativ zu dem ersten Gehäuse (111) bewegt;
eine Erfassungsschaltung (320), die ausgebildet ist, sich gemäß der Bewegung des zweiten Gehäuses (112) zu bewegen, und die eine Vielzahl von leitfähigen Pads (PAD1, ..., PADN; 500) umfasst;
eine Drehkörperstruktur (331), die an einem Punkt innerhalb des Gehäuses (110) positioniert ist und ausgebildet ist, beliebig eines der Vielzahl von leitfähigen Pads (PAD1, ..., PADN; 500) mit der Masse (332) durch Drehen zu verbinden, wenn sich das zweite Gehäuse (112) relativ zu dem ersten Gehäuse (111) bewegt; und
mindestens einen Prozessor (310), der elektrisch mit der flexiblen Anzeige (120) und der Erfassungsschaltung (320) verbunden ist,
wobei der mindestens eine Prozessor (310) ausgebildet ist, die Größe des zur Außenseite freiliegenden Bereichs basierend auf über die Erfassungsschaltung (320) erlangten elektrischen Eigenschaften zu bestimmen.

2. Elektronische Vorrichtung nach Anspruch 1, wobei der mindestens eine Prozessor (310) ausgebildet ist, basierend auf der Größe des zur Außenseite freiliegenden Bereichs einen Bildschirm über die flexible Anzeige (120) anzuzeigen.

3. Elektronische Vorrichtung nach Anspruch 1, wobei der Punkt innerhalb des Gehäuses (110) ein Punkt ist, an dem die flexible Anzeige (120) zur Außenseite freiliegt, wenn sich das zweite Gehäuse (112) relativ zu dem ersten Gehäuse (111) bewegt.

4. Elektronische Vorrichtung nach Anspruch 1, wobei die elektronische Vorrichtung eine Antriebsschiene (335) umfasst, die ausgebildet ist, sich mit der Bewegung der Erfassungsschaltung (320) zu bewegen, und die mit der Drehkörperstruktur (331) in Eingriff ist, und
die Drehkörperstruktur (331) in einem Bereich, in dem die Antriebsschiene (335) und die Drehkörperstruktur (331) miteinander in Eingriff sind, beliebig eines der Vielzahl von leitfähigen Pads (PAD1, ..., PADN; 500) mit der Masse (332) verbindet.

5. Elektronische Vorrichtung nach Anspruch 1, wobei die Vielzahl von leitfähigen Pads (PAD1, ..., PADN; 500) in einer Vielzahl von Spalten angeordnet ist, und
die elektronische Vorrichtung ein zusätzliches Kontaktelement umfasst, das an einem anderen Punkt innerhalb des Gehäuses (110), der der Anordnung der Vielzahl von leitfähigen Pads (PAD1, ..., PADN; 500) entspricht, beliebig eines der Vielzahl von leitfähigen Pads (PAD1, ..., PADN; 500) mit der Masse (332) verbindet.

6. Elektronische Vorrichtung nach Anspruch 1, wobei die elektronische Vorrichtung ferner einen Speicher (340) umfasst, der ausgebildet ist, Positionsinformationen zu speichern, die jeder der Vielzahl von leitfähigen Pads (PAD1, ..., PADN; 500) entsprechen.

7. Elektronische Vorrichtung nach Anspruch 6, wobei der mindestens eine Prozessor (310) ausgebildet ist zum:
Erlangen von Positionsinformationen eines leitfähigen Pads, das mit der Masse (332) verbunden ist, aus den Positionsinformationen basierend auf den elektrischen Eigenschaften; und
Bestimmen der Größe des zur Außenseite freiliegenden Bereichs basierend auf den erlangten Positionsinformationen.

8. Elektronische Vorrichtung nach Anspruch 1, wobei die elektrischen Eigenschaften durch mindestens einen von einem Widerstandswert, einem Kapazitätswert und einem Induktivitätswert ausgedrückt werden.

9. Verfahren zum Betreiben einer elektronischen Vorrichtung, die eine flexible Anzeige (120) umfasst, das durch einen Teil eines Gehäuses (110) zu Außenseite der elektronischen Vorrichtung freiliegt, wobei das Gehäuse (110) ein erstes Gehäuse (111) und ein zweites Gehäuse (112) umfasst, das relativ zu dem ersten Gehäuse (111) beweglich ist, und die flexible Anzeige (120) einen Bereich aufweist, der zur Außenseite freiliegt, und sich eine Größe des Bereichs ändert, wenn sich das zweite Gehäuse (112) relativ zu dem ersten Gehäuse (111) bewegt, wobei das Verfahren umfasst:
Erlangen (901) von elektrischen Eigenschaften basierend auf einer Erfassungsschaltung (320), die sich gemäß der Bewegung des zweiten Gehäuses (112) bewegt und eine Vielzahl von leitfähigen Pads (PAD1, ..., PADN; 500) und eine Drehkörperstruktur (331) umfasst, die an einem Punkt innerhalb des Gehäuses (110) positioniert ist und beliebig eines der Vielzahl von leitfähigen Pads (PAD1, ..., PADN) durch Drehen mit der Masse (332) verbindet, wenn sich das zweite Gehäuse (112) relativ zu dem ersten Gehäuse (111) bewegt; und
Bestimmen (903) der Größe des Bereichs, dessen flexible Anzeige (120) zur Außenseite freiliegt, basierend auf den erfassten elektrischen Eigenschaften.

10. Verfahren nach Anspruch 9, wobei die elektronische Vorrichtung ferner Speicher (340) zum Speichern von Positionsinformationen umfasst, die jedem der Vielzahl von leitfähigen Pads (PAD1, ..., PADN; 500) entsprechen, und
Bestimmen (903) der Größe des Bereichs, dessen flexible Anzeige (120) zur Außenseite freiliegt, umfasst:
Bestimmen (1003) eines leitfähigen Pads (PAD1, ..., PADN; 500) aus der Vielzahl von leitfähigen Pads (PAD1, ..., PADN; 500), das den elektrischen Eigenschaften entspricht;
Erlangen (1005) von Positionsinformationen des leitfähigen Pads (PAD1, ..., PADN) aus den Positionsinformationen; und
Bestimmen (1007) der Größe des Bereichs, dessen flexible Anzeige (120) zur Außenseite freiliegt, basierend auf den erlangten Positionsinformationen.

11. Verfahren nach Anspruch 9, ferner umfassend Anzeigen von Bildschirm über die flexible Anzeige (120), der der Größe des zur Außenseite freiliegenden Bereichs entspricht.

12. Verfahren nach Anspruch 9, wobei Erlangen der elektrischen Eigenschaften umfasst:
Verbinden beliebig eines der Vielzahl von leitfähigen Pads (PAD1, ..., PADN; 500) mit der Masse (332) in einem Bereich, in dem eine Antriebsschiene (335) und die Drehkörperstruktur (331) miteinander in Eingriff sind, wobei die Antriebsschiene (335) ausgebildet ist, sich mit der Bewegung der Erfassungsschaltung (320) zu bewegen, und mit der Drehkörperstruktur (331) in Eingriff ist; und
Erlangen der elektrischen Eigenschaften über die Erfassungsschaltung (320) basierend auf Verbindung mit der Masse (332).

13. Verfahren nach Anspruch 9, wobei die Vielzahl von leitfähigen Pads (PAD1, ..., PADN; 500) in einer Vielzahl von Spalten in der Erfassungsschaltung (320) angeordnet ist, und
die elektronische Vorrichtung ferner ein zusätzliches Kontaktelement umfasst, das an einem anderen Punkt innerhalb des Gehäuses (110), der der Anordnung der Vielzahl von leitfähigen Pads (PAD1, ..., PADN; 500) entspricht, beliebig eines der Vielzahl von leitfähigen Pads (PAD1, ..., PADN; 500) mit der Masse (332) verbindet.

14. Verfahren nach Anspruch 9, wobei die elektrischen Eigenschaften durch mindestens einen von einem Widerstandswert, einem Kapazitätswert und einem Induktivitätswert ausgedrückt werden.

## Revendications

1. Dispositif électronique, comprenant :
un boîtier (110) comprenant un premier boîtier (111) et un deuxième boîtier (112) qui est mobile par rapport au premier boîtier (111) ;
une unité d'affichage flexible (120) exposée à l'extérieur du dispositif électronique à travers une partie du boîtier (110), l'unité d'affichage flexible (120) comportant une zone exposée à l'extérieur et une taille de la zone changeant lorsque le deuxième boîtier (112) se déplace par rapport au premier boîtier (111) ;
un circuit de détection (320) configuré pour se déplacer selon le déplacement du deuxième boîtier (112) et comprenant une pluralité de plots conducteurs (PAD1, ..., PADN ; 500) ;
une structure de corps rotatif (331) positionnée à un point à l'intérieur du boîtier (110) et configurée pour connecter l'un quelconque de la pluralité de plots conducteurs (PAD1, ..., PADN ; 500) à la terre (332) en tournant lorsque le deuxième boîtier (112) se déplace par rapport au premier boîtier (111) ; et
au moins un processeur (310) connecté électriquement à l'unité d'affichage flexible (120) et au circuit de détection (320),
dans lequel le ou les processeurs (310) sont configurés pour déterminer la taille de la zone exposée à l'extérieur, sur la base des caractéristiques électriques acquises à travers le circuit de détection (320).

2. Dispositif électronique selon la revendication 1, dans lequel le ou les processeurs (310) sont configurés pour afficher un écran à travers l'unité d'affichage flexible (120) sur la base de la taille de la zone exposée à l'extérieur.

3. Dispositif électronique selon la revendication 1, dans lequel le point à l'intérieur du boîtier (110) est un point auquel l'unité d'affichage flexible (120) est exposée à l'extérieur lorsque le deuxième boîtier (112) se déplace par rapport au premier boîtier (111).

4. Dispositif électronique selon la revendication 1, dans lequel le dispositif électronique comprend un rail de conduite (335) qui est configuré pour se déplacer avec le déplacement du circuit de détection (320) et est engagé avec la structure de corps rotatif (331), et
la structure de corps rotatif (331) connecte l'un quelconque de la pluralité de plots conducteurs (PAD1, ..., PADN ; 500) à la terre (332) dans une région où le rail de conduite (335) et la structure de corps rotatif (331) sont engagés l'un avec l'autre.

5. Dispositif électronique selon la revendication 1, dans lequel la pluralité de plots conducteurs (PAD1, ..., PADN ; 500) sont disposés en une pluralité de colonnes, et
le dispositif électronique comprend un élément de contact supplémentaire connectant l'un quelconque de la pluralité de plots conducteurs (PAD1, ..., PADN ; 500) à la terre (332) à un autre point à l'intérieur du boîtier (110) correspondant à la disposition de la pluralité de plots conducteurs (PAD1, ..., PADN ; 500).

6. Dispositif électronique selon la revendication 1, dans lequel le dispositif électronique comprend en outre une mémoire (340) configurée pour stocker des informations de position correspondant à chacun de la pluralité de plots conducteurs (PAD1, ..., PADN ; 500).

7. Dispositif électronique selon la revendication 6, dans lequel le ou les processeurs (310) sont configurés pour :
acquérir des informations de position d'un plot conducteur connecté à la terre (332) parmi les informations de position, sur la base des caractéristiques électriques ; et
déterminer la taille de la zone exposée à l'extérieur, sur la base des informations de position acquises.

8. Dispositif électronique selon la revendication 1, dans lequel les caractéristiques électriques sont exprimées par au moins l'une parmi une valeur de résistance, une valeur de capacité et une valeur d'inductance.

9. Procédé de fonctionnement d'un dispositif électronique comprenant une unité d'affichage flexible (120) exposée à l'extérieur du dispositif électronique à travers une partie du boîtier (110), le boîtier (110) comprenant un premier boîtier (111) et un deuxième boîtier (112) qui est mobile par rapport au premier boîtier (111), et l'unité d'affichage flexible (120) comportant une zone exposée à l'extérieur et une taille de la zone changeant lorsque le deuxième boîtier (112) se déplace par rapport au premier boîtier (111), le procédé comprenant :
acquérir (901) des caractéristiques électriques, sur la base d'un circuit de détection (320) qui se déplace selon le déplacement du deuxième boîtier (112) et comprend une pluralité de plots conducteurs (PAD1, ..., PADN ; 500) et d'une structure de corps rotatif (331) qui est positionnée à un point à l'intérieur du boîtier (110) et connecte l'un quelconque de la pluralité de plots conducteurs (PAD1, ..., PADN) à la terre (332) en tournant lorsque le deuxième boîtier (112) se déplace par rapport au premier boîtier (111) ; et
déterminer (903) la taille de la zone dans laquelle l'unité d'affichage flexible (120) est exposée à l'extérieur, sur la base des caractéristiques électriques acquises.

10. Procédé selon la revendication 9, dans lequel le dispositif électronique comprend en outre une mémoire (340) configurée pour stocker des informations de position correspondant à chacun de la pluralité de plots conducteurs (PAD1, ..., PADN ; 500), et
la détermination (903) de la taille de la zone dans laquelle l'unité d'affichage flexible (120) est exposée à l'extérieur comprend :
déterminer (1003) un plot conducteur (PAD1, ..., PADN ; 500) correspondant aux caractéristiques électriques parmi la pluralité de plots conducteurs (PAD1, ..., PADN ; 500) ;
acquérir (1005) des informations de position du plot conducteur (PAD1, ..., PADN) parmi les informations de position ; et
déterminer (1007) la taille de la zone dans laquelle l'unité d'affichage flexible (120) est exposée à l'extérieur, sur la base des informations de position acquises.

11. Procédé selon la revendication 9, comprenant en outre : afficher, à travers l'unité d'affichage flexible (120), un écran correspondant à la taille de la zone exposée à l'extérieur.

12. Procédé selon la revendication 9, dans lequel l'acquisition des caractéristiques électriques comprend :
connecter l'un quelconque de la pluralité de plots conducteurs (PAD1, ..., PADN ; 500) à la terre (332) dans une région où un rail de conduite (335) et la structure de corps rotatif (331) sont engagés l'un avec l'autre, le rail de conduite (335) étant configuré pour se déplacer avec le déplacement du circuit de détection (320) et étant engagé avec la structure de corps rotatif (331) ; et
acquérir les caractéristiques électriques à travers le circuit de détection (320), sur la base de la connexion à la terre (332).

13. Procédé selon la revendication 9, dans lequel la pluralité de plots conducteurs (PAD1, ..., PADN ; 500) sont disposés en une pluralité de colonnes dans le circuit de détection (320), et
le dispositif électronique comprend en outre un élément de contact supplémentaire connectant l'un quelconque de la pluralité de plots conducteurs (PAD1, ..., PADN ; 500) à la terre (332) à un autre point à l'intérieur du boîtier (110) correspondant à la disposition de la pluralité de plots conducteurs (PAD1, ..., PADN ; 500).

14. Procédé selon la revendication 9, dans lequel les caractéristiques électriques sont exprimées par au moins l'une parmi une valeur de résistance, une valeur de capacité et une valeur d'inductance.
